# EUROPEAN PATENT APPLICATION

(11) **EP 4 636 764 A1**
(43) Date of publication of application: **22.10.2025**
(21) Application number: 25171077.8
(22) Date of filing: 16.04.2025
(51) Int. Cl.: G10L 21/10, G06V 10/82, G10L 25/57, H04N 21/44

(54) **VIDEO GENERATION METHOD, APPARATUS, DEVICE, MEDIUM AND PROGRAM PRODUCT**

(30) Priority: 16.04.2024 CN 202410458518
(71) Applicant: BEIJING YOUZHUJU NETWORK TECHNOLOGY CO. LTD., Beijing 101299 (CN)
(72) Inventor: LIN, Zeyi, Beijing, 100028 (CN)
(74) Representative: Isarpatent

(57) **Abstract**

The present disclosure relates to the technical field of video processing, and discloses a video generation method, apparatus, device, medium and program product. The method includes: acquiring (S101) target audio data and first video data of a target object; acquiring (S102) second video data, the second video data is obtained by performing mask processing on a lip area in video data of the target object; performing (S103) feature processing on the target audio data based on a target multimodal model to obtain a target audio feature; performing (S104) feature extraction on the first video data and the second video data to obtain a feature to be processed; and predicting (S105) a lip area in the second video data based on the target audio feature and the feature to be processed, to determine a target video corresponding to the target audio data.

## Description

### FIELD

The present disclosure relates to the technical field of video processing, and specifically to a video generation method, apparatus, device, medium and program product.

### BACKGROUND

At present, an image generation model is mainly used to generate a corresponding lip shape from a target speech, and then the generated lip shape is synthesized with a face, so as to generate a speaking video corresponding to the target speech. However, in the video generated in this way of driving a lip shape, the transition of the lip shape among different video frames is abrupt, which results in a poor effect of driving the lip shape in a speech-driven video.

### SUMMARY

In view of this, the present disclosure provides a video generation method, apparatus, device, medium and program product to solve the problem of a poor effect of driving a lip shape in a speech-driven video.

In a first aspect, the present disclosure provides a video generation method. The method comprises: acquiring target audio data and first video data of a target object; acquiring second video data, the second video data being obtained by performing mask processing on a lip area in video data of the target object; performing feature processing on the target audio data based on a target multimodal model to obtain a target audio feature, the target multimodal model being obtained based on performing synchronization alignment training of a sample audio feature and a sample video feature on paired sample audio and sample video; performing feature extraction on the first video data and the second video data to obtain a feature to be processed; and predicting a lip area in the second video data based on the target audio feature and the feature to be processed, to determine a target video corresponding to the target audio data.

In a second aspect, the present disclosure provides a video generation apparatus. The apparatus comprises: a target data acquiring module configured to acquire target audio data and first video data of a target object; a driving video acquiring module configured to acquire second video data, the second video data being obtained by performing mask processing on a lip area in video data of the target object; an audio feature extraction module configured to perform feature processing on the target audio data based on a target multimodal model to obtain a target audio feature, the target multimodal model being obtained based on performing synchronization alignment training of a sample audio feature and a sample video feature on paired sample audio and sample video; a video feature extraction module configured to perform feature extraction on the first video data and the second video data to obtain a feature to be processed; and a target video generation module configured to predict a lip area in the second video data based on the target audio feature and the feature to be processed, to determine a target video corresponding to the target audio data.

In a third aspect, the present disclosure provides a computer device, including: a memory and a processor, the memory and the processor communicating with each other, the memory having computer instructions stored therein, and the processor executing the computer instructions to perform the video generation method of the above first aspect or any one of its corresponding implementations.

In a fourth aspect, the present disclosure provides a computer-readable storage medium having computer instructions stored thereon, where the computer instructions are configured to cause a computer to perform the video generation method of the first aspect or any one of its corresponding implementations.

In a fifth aspect, the present disclosure provides a computer program product including computer instructions, where the computer instructions are configured to cause a computer to perform the video generation method of the first aspect or any one of its corresponding implementations.

In the video generation method provided in the embodiment of the present disclosure, feature processing is performed on the target audio data by using the target multimodal model that is obtained based on performing the synchronization alignment training of the sample audio feature and the sample video feature on the paired sample audio and sample video, so that the target audio feature synchronous with the video content can be obtained. The target audio feature is used as a guidance condition, and the lip area in the second video data is predicted based on the feature to be processed corresponding to the first video data and the second video data, so as to learn the video feature among the video frames, so that the predicted lip area is synchronous with the target audio feature, and the temporal information among the video frames can also be considered, so that the transition of the lip shape among the video frames in the finally determined target video is natural, and the quality of driving the lip shape in the target video is improved.

### BRIEF DESCRIPTION OF THE DRAWINGS

In order to more clearly explain the technical solutions in the specific embodiments of the present disclosure or in the prior art, the following will briefly introduce the drawings that need to be used in the description of the specific embodiments or the prior art. Obviously, the drawings in the following description are some embodiments of the present disclosure. For those of ordinary skill in the art, other drawings can be obtained according to these drawings without paying creative efforts.
FIG. 1 is a schematic flowchart of a video generation method according to an embodiment of the present disclosure;
FIG. 2 is a schematic flowchart of a method for determining a target multimodal model according to an embodiment of the present disclosure;
FIG. 3 is a schematic flowchart of a method for determining a target image generation model according to an embodiment of the present disclosure;
FIG. 4 is a schematic flowchart of another method for determining a target image generation model according to an embodiment of the present disclosure;
FIG. 5 is a structural block diagram of a video generation apparatus according to an embodiment of the present disclosure; and
FIG. 6 is a structural block diagram of a computer device according to an embodiment of the present disclosure.

### DETAILED DESCRIPTION OF EMBODIMENTS

In order to make the objectives, technical solutions and advantages of the embodiments of the present disclosure more clear, the technical solutions in the embodiments of the present disclosure will be clearly and comprehensively described below in combination with the drawings in the embodiments of the present disclosure. Obviously, the described embodiments are part of the embodiments of the present disclosure, rather than all of them. Based on the embodiments in the present disclosure, all other embodiments obtained by those skilled in the art without paying creative efforts belong to the protection scope of the present disclosure.

It can be understood that before using the technical solutions disclosed in the embodiments of the present disclosure, the user should be informed of the type, scope of use, use scenarios, etc. of personal information involved in the present disclosure in an appropriate way in accordance with relevant laws and regulations, and the user's authorization should be obtained.

For example, in response to receiving an active request from the user, prompt information is sent to the user, so as to clearly prompt the user that the operation requested to be performed will require the acquisition and use of the user's personal information. Thus, the user can independently choose whether to provide personal information to the software or hardware that executes the operation of the technical solution of the present disclosure, such as an electronic device, an application, a server, or a storage medium, according to the prompt information.

As an optional but non-limiting implementation, in response to receiving the user's active request, the prompt information may be sent to the user in the form of a pop-up window, for example, and the prompt information may be presented in text in the pop-up window. In addition, the pop-up window may also carry a selection control for the user to choose whether to "agree" or "disagree" to provide personal information to the electronic device.

It can be understood that the above process of notifying and obtaining the user's authorization is only illustrative and does not limit the implementation of the present disclosure, and other methods that meet relevant laws and regulations may also be applied to the implementation of the present disclosure.

It can be understood that the data involved in the technical solution (including but not limited to the data itself, the acquisition or use of the data) should comply with the requirements of corresponding laws, regulations and related provisions.

In the related art, the method for driving the lip shape based on the speech mainly includes a lip shape driving method based on a generative adversarial network and a lip shape driving method based on a diffusion model. In contrast, the lip shape driving method based on the diffusion model is better than the lip shape driving method based on the generative adversarial network in terms of image generation quality and controllability.

At present, in the related image generation and processing technology, the diffusion model is mainly used to generate a corresponding image through a prompt text. Based on this technology, some technicians have begun to use the diffusion model to turn a speech into a lip shape synchronous with the speech, so as to drive the lip shape change of a video object.

However, this method for driving the lip shape is mainly to drive the lip shape based on a single frame of image, which only considers the mapping relationship between the single frame of image and the audio, and ignores the continuity of the lip shape change, which results in an abrupt transition of the lip shape among different video frames in the generated video, and causes a poor effect of driving the lip shape in the speech-driven video.

In view of this, an embodiment of a video generation method is provided according to the embodiments of the present disclosure. It should be noted that the steps shown in the flowcharts of the drawings may be executed in a computer system such as a set of computer executable instructions, and although a logical order is shown in the flowcharts, in some cases, the steps shown or described may be executed in a different order than here.

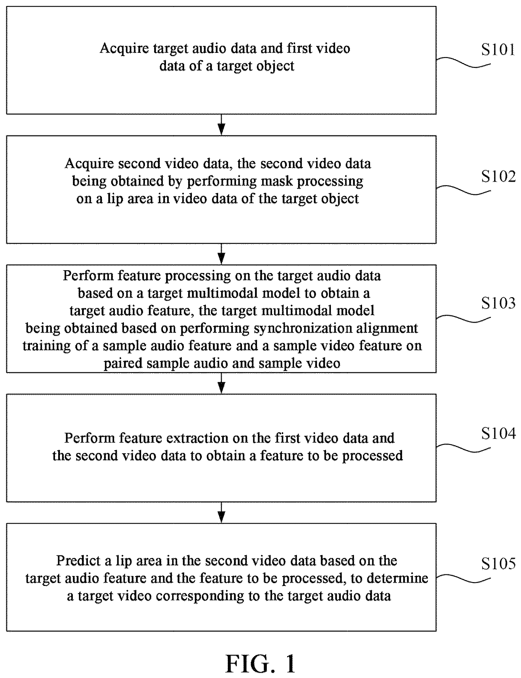

In this embodiment, a video generation method is provided, which can be used in a mobile terminal, such as a mobile phone, a tablet computer, etc. FIG. 1 is a schematic flowchart of a video generation method according to an embodiment of the present disclosure. As shown in FIG. 1, the flow includes the following steps.

At step S101, target audio data and first video data of a target object are acquired.

Specifically, the target audio data may be recorded by a recording device. Alternatively, the existing audio data is edited by audio editing software, etc., to obtain the target audio data. Alternatively, the corresponding target audio data is synthesized through a target text and a target timbre.

Specifically, the target object may be a virtual portrait or a drawn animation character. The first video data is video data that can represent the character of the target object, which is mainly used to describe facial information of the target object, such as the lip shape, lip size, lipstick number, etc.

At step S102, second video data is acquired, and the second video data is obtained by performing mask processing on a lip area in video data of the target object.

It should be noted that the video data of the target object mentioned in step S102 may be the above first video data, or other video data of the target object that contains the facial information of the target object.

At step S103, feature processing is performed on the target audio data based on a target multimodal model to obtain a target audio feature, and the target multimodal model is obtained based on performing synchronization alignment training of a sample audio feature and a sample video feature on paired sample audio and sample video.

Specifically, the synchronous sample audio and sample video, and the asynchronous sample audio and sample video may be used as a positive sample and a negative sample of a preset multimodal model respectively, and the preset multimodal model performs the synchronization alignment training of the sample audio feature and the sample video feature by using the paired positive and negative samples, to obtain the target multimodal model.

Optionally, the target multimodal model may be a multimodal model such as a Contrastive Language-Image Pre-training (CLIP) model, a Large-scale ImaGe and Noisy-Text Embedding (ALIGN) model, or a neural network model based on a self-attention mechanism.

At Step S104, feature extraction is performed on the first video data and the second video data to obtain a feature to be processed.

Specifically, a decoder in a target encoder-decoder network may be used to perform feature extraction on the first video data and the second video data to obtain the feature to be processed.

Furthermore, considering that the first video data and the second video data include multiple frames of video frames, a multi-frame version of Variational AutoEncoder (VAE) may be used as the above target encoder-decoder network.

It should be noted that in the present disclosure, a main function of the first encoder is to reduce the first video data and the second video data from the original pixel space to the feature of the hidden space, so as to reduce the amount of computation in the subsequent prediction of the lip area in the second video data.

For example, assuming that the video size of the first video data and the second video data is 256*256*75, the decoder can be used to reduce the first video data and the second video data with an original size of 256*256*75 to the feature of the hidden space of 64*64*25, so as to reduce the amount of computation in the subsequent prediction of the lip area in the second video data.

At step S105, the lip area in the second video data is predicted based on the target audio feature and the feature to be processed, to determine a target video corresponding to the target audio data.

Specifically, an image generation model may be used to perform denoising processing on pure noise in the hidden space by using the target audio feature and the feature to be processed, so as to predict the lip area in the second video data to obtain the target video corresponding to the target audio data.

Specifically, the image generation model may be a generative adversarial network, a diffusion model, or an end-to-end image segmentation model based on a convolutional neural network (U-Net: Convolutional Networks for Biomedical Image Segmentation, U-Net network for short).

In the video generation method provided in this embodiment, the feature processing is performed on the target audio data by using the target multimodal model that is obtained based on performing the synchronization alignment training of the sample audio feature and the sample video feature on the paired sample audio and sample video, so that the target audio feature synchronous with the video content can be obtained. The target audio feature is used as a guidance condition, and the lip area in the second video data is predicted based on the feature to be processed corresponding to the first video data and the second video data, so as to learn the video feature among the video frames, so that the predicted lip area is synchronous with the target audio feature, and the temporal information among the video frames can also be considered, so that the transition of the lip shape among the video frames in the finally determined target video is natural, and the quality of driving the lip shape in the target video is improved.

In some optional implementations, the acquiring the target audio data in step S101 includes: acquiring a target text and a target timbre; and converting the target text into the target audio data based on the target timbre.

Specifically, a speech conversion tool may be used to convert the target text into the target audio data based on the target timbre. In addition, during the conversion, parameters such as volume, speed, and tone in the target audio data may also be adjusted.

In the video generation method provided in this embodiment, the target text is converted by using the target timbre to obtain the target audio data. Therefore, the timbre and audio content of the target audio data can be flexibly adjusted.

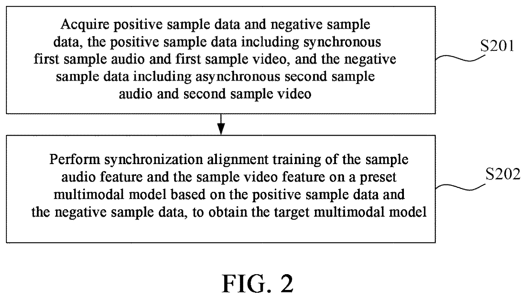

In some optional implementations, as shown in FIG. 2, the target multimodal model in step S103 is determined by the following steps.

At step S201, positive sample data and negative sample data are acquired, the positive sample data includes synchronous first sample audio and first sample video, and the negative sample data includes asynchronous second sample audio and second sample video.

Specifically, an audio extraction device or software may be used to extract the audio in any video to obtain the synchronous first sample audio and first sample video.

In addition, an audio extraction device or software may be used to extract the audio in any video, and then adjust the audio track or other audio parameters of the extracted audio to obtain the asynchronous second sample audio and second sample video. Alternatively, the audio corresponding to a certain sample video is replaced with the audio of another sample video to obtain the asynchronous second sample audio and second sample video.

At step S202, synchronization alignment training of the sample audio feature and the sample video feature is performed on a preset multimodal model based on the positive sample data and the negative sample data, to obtain the target multimodal model.

It can be understood that the synchronization alignment training of the sample audio feature and the sample video feature is performed on the preset multimodal model, that is, the preset multimodal model is trained contrastively by using the positive sample data and the negative sample data, so as to adjust the parameter of the preset multimodal model according to the result of the contrastive training, so that the preset multimodal model maximizes the similarity between the first sample audio and the first sample video in the positive sample data and minimizes the similarity between the second sample audio and the second sample video.

In the video generation method provided in this embodiment, the preset multimodal model performs the synchronization alignment training of the sample audio feature and the sample video feature by using the synchronous first sample audio and first sample video, and the asynchronous second sample audio and second sample video. Therefore, the finally trained target multimodal model can convert the input audio data into an audio feature synchronous with the video feature, so as to improve the synchronization between the lip shape in the video and the audio data when the corresponding video is generated based on the audio data.

In some optional implementations, the predicting the lip area in the second video data based on the target audio feature and the feature to be processed, to determine the target video corresponding to the target audio data in step S105 includes the following steps.

At step a1, the target audio feature and the feature to be processed are input into a target image generation model, and the lip area in the second video data is predicted to obtain target feature data, and the target image generation model is obtained based on performing parameter update of a sample audio feature output by the target multimodal model and a video feature of a sample video of a sample object.

Specifically, the target image generation model is a U-Net network. The target audio feature, the feature to be processed, and pure noise conforming to Gaussian distribution may be spliced, and the spliced result may be input into the U-Net network for denoising processing, so as to predict the lip area in the second video data to obtain the target feature data.

At step a2, the target feature data is decoded to obtain the target video.

Specifically, a decoder in a target encoder-decoder network or a variational autoencoder may be used to decode the target feature data to obtain the target video. That is, the target feature data is restored to the original pixel space to obtain the target video.

For example, in response to the size of the target feature data output by the U-Net network being 64*64*25, the decoder can be used to restore the target feature data with a size of 64*64*25 from the hidden space to the original pixel space to obtain the target video.

In the video generation method provided in this embodiment, the target audio feature and the feature to be processed are input into the target image generation model, and the lip area in the second video data is predicted to obtain the target feature data. Moreover, the target image generation model is obtained based on performing the parameter update of the sample audio feature output by the target multimodal model and the video feature of the sample video of the sample object. Therefore, the target image generation model can be used to generate a lip shape sequence synchronous with the target audio data in the hidden space, so as to obtain the target feature data, and the target video synchronous with the target audio data is obtained by decoding.

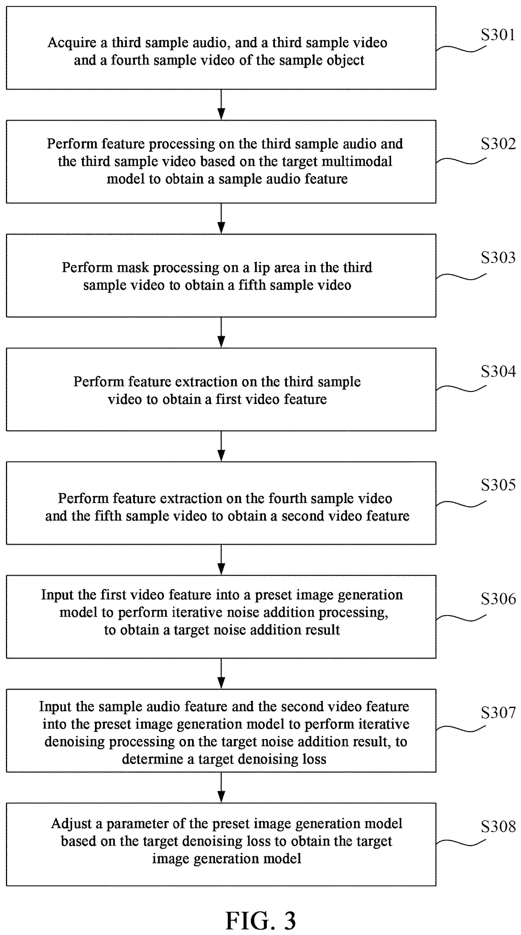

In some optional implementations, as shown in FIG. 3, the target image generation model in step a1 is determined by the following steps.

At step S301, third sample audio, and third sample video and fourth sample video of a sample object are acquired.

Specifically, the third sample audio may be recorded by a recording device. Alternatively, the third sample audio is acquired from a related audio database. Alternatively, the corresponding third sample audio is synthesized through a sample text and a sample timbre.

Specifically, the third sample video is a video of a sample object speaking truthfully, and the fourth sample video is a video that can represent the character of the sample object, which is mainly used to describe facial information of the sample object. The third sample video and the fourth sample video may be the same or different.

At step S302, feature processing is performed on the third sample audio and the third sample video based on the target multimodal model to obtain a sample audio feature.

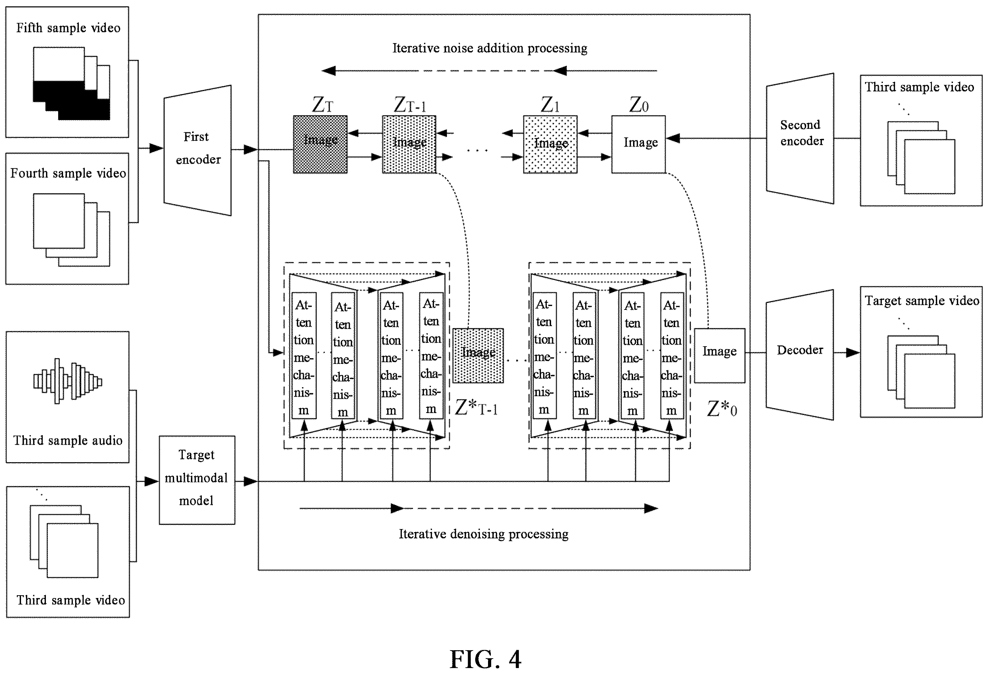

Specifically, as shown in FIG. 4, the third sample audio and the third sample video are input into the target multimodal model, and the sample audio feature of the third sample audio and the sample video feature of the third sample video are synchronized and aligned to obtain the synchronous sample audio feature.

At step S303, mask processing is performed on a lip area in the third sample video to obtain fifth sample video.

Specifically, the lip area of each frame of video frames in the third sample video is marked, the lip mask of the lip area of each frame of video frames (that is, the black marked area in the fifth sample video shown in FIG. 4) is constructed, and the lip area of each frame of video frames is masked by using the lip mask.

At step S304, feature extraction is performed on the third sample video to obtain a first video feature.

Specifically, the feature extraction may be performed on the third sample video by using a second encoder in the target encoder-decoder network to obtain the first video feature.

At step S305, feature extraction is performed on the fourth sample video and the fifth sample video to obtain a second video feature.

Specifically, the feature extraction may be performed on the fourth sample video and the fifth sample video by using a first encoder in the target encoder-decoder network to obtain the second video feature.

It should be noted that the first encoder and the second encoder in the target encoder-decoder network share parameters. Before the target image generation model is determined, a preset encoder-decoder network needs to be trained first, so that the preset encoder-decoder network can correspondingly output the original video when any original video of an object is input, so as to obtain the target encoder-decoder network.

At step S306, the first video feature is input into the preset image generation model to perform iterative noise addition processing, to obtain a target noise addition result.

Specifically, the first video feature is input into the preset image generation model to perform forward noise addition processing, to obtain a noise addition result of noise addition processing at each iteration. The noise addition result of the noise addition processing at the last iteration is used as the target noise addition result. In addition, the noise data added in noise addition processing at each iteration also needs to be recorded, so as to determine the denoising loss of the subsequent denoising processing.

At step S307, the sample audio feature and the second video feature are input into the preset image generation model to perform iterative denoising processing on the target noise addition result, to determine a target denoising loss.

Specifically, the synchronous sample audio feature and the second video feature are spliced, the spliced result is input into the preset image generation model, and the noise data added in noise addition processing at each iteration is used as a label to perform denoising processing on the target noise addition result. Then, the denoising loss of denoising processing at each iteration is determined according to the difference between the noise added in the forward noise addition process and the denoising result of denoising processing at each iteration in the corresponding reverse denoising process. Then, the target denoising loss is determined according to the denoising loss of denoising processing at each iteration. For example, the denoising losses of denoising processing at each iteration are weighted and averaged or accumulated to obtain the target denoising loss.

At step S308, a parameter of the preset image generation model is adjusted based on the target denoising loss to obtain the target image generation model.

Specifically, the parameter of the preset image generation model is adjusted according to the target denoising loss, so that the denoising result finally output by the preset image generation model is close to the first video feature.

It should be noted that in the process of adjusting the parameter of the preset image generation model, the parameters of the target multimodal model and the target encoder-decoder network need to be fixed.

In the video generation method provided in this embodiment, the feature processing is performed on the third sample audio and the third sample video based on the target multimodal model to obtain the sample audio feature synchronous with the sample video feature of the third sample video. The first video feature of the third sample video is input into the preset image generation model to perform the iterative noise addition processing to obtain the target noise addition result, and the second video feature of the fourth sample video and the fifth sample video obtained by performing the mask processing on the third sample video is input into the preset image generation model to perform the iterative noise addition processing on the target noise addition result, so as to determine the target denoising loss, so as to update the parameter of the preset image generation model with the target denoising loss. Therefore, the accuracy of the video generated by the target image generation model based on the audio feature can be improved and the effect of video generation can be improved.

In some optional implementations, the inputting the first video feature into the preset image generation model to perform the iterative noise addition processing to obtain the target noise addition result in step S306 includes: inputting the first video feature into the preset image generation model to perform the iterative noise addition processing to obtain a noise addition result of noise addition processing at each iteration; and using a noise addition result of the noise addition processing at a last iteration as the target noise addition result.

It should be noted that in the process of the iterative noise addition processing, in response to the noise addition result of the noise addition processing at a last iteration being pure noise conforming to Gaussian distribution, the noise addition is stopped.

In some optional implementations, the inputting the sample audio feature and the second video feature into the preset image generation model to perform the iterative denoising processing on the target noise addition result, to determine the target denoising loss in step S307 includes the following steps.

At step b1, noise data added in noise addition processing at each iteration by the preset image generation model is acquired.

Specifically, as shown in FIG. 4, after the first video feature Z₀ is input into the preset image generation model, the preset image generation model performs iterative noise addition processing on the first video feature to obtain a noise addition result Z₁ of the noise addition at the first iteration,..., a noise addition result Z_{T-1} of the noise addition at the (T-1)^{th} iteration, and a noise addition result Z_{T} of the noise addition at the T^{th} iteration (that is, the target noise addition result), and records the noise data added at each iteration.

At step b2, the sample audio feature and the second video feature are input into the preset image generation model to perform iterative denoising processing on the target noise addition result, to obtain a denoising result of denoising processing at each iteration, the denoising result corresponds to the noise data.

Specifically, as shown in FIG. 4, the sample audio feature output by the target multimodal model and the second video feature are input into the preset image generation model, the sample audio feature is used as a condition input to perform attention mechanism processing with the second video feature, so as to fuse all features to perform reverse inference on the target noise addition result, to obtain a denoising result Z*_{T-1} corresponding to the noise addition result Z_{T-1} at the T^{th} iteration,..., a denoising result Z*₁ corresponding to the noise addition result Z₁ at the first iteration, and a denoising result Z*₀ corresponding to the first video feature Z₀ in turn. The target sample video the same/similar to the third sample video is restored according to the denoising result Z*₀ corresponding to the first video feature Z₀.

It should be noted that when fusing all features based on the attention mechanism, all features may be fused into a one-dimensional feature, so as to further improve the synchronization between the audio and the video.

At step b3, a denoising loss of denoising processing at each iteration is determined based on the denoising result and the corresponding noise data, to obtain the target denoising loss.

It can be understood that the denoising process of the preset image generation model is the inverse process of the noise addition process. The denoising result of the denoising processing at the first iteration corresponds to the noise data of the noise addition processing at the (T-1)^{th} iteration, the denoising result of the denoising processing at the n^{th} iteration corresponds to the noise data of the noise addition processing at the (T-n)^{th} iteration, and the denoising result of the denoising processing at the T^{th} iteration corresponds to the first video feature. T is the total iteration number of the noise addition processing.

Specifically, according to the reverse inference order, the corresponding denoising loss is determined based on Z*_{T-1} and the noise data added in the (T-1)^{th} iteration, and the parameter of the preset image generation model is updated according to the determined noise loss. By analogy, the denoising losses of denoising processing at all iterations are obtained, so that the preset image generation model can learn the noise data added in noise addition processing at each iteration.

Specifically, a preset loss function may be used to measure the difference between the denoising result and the corresponding noise data, so as to obtain the denoising loss of denoising processing at each iteration. The preset loss function may be root mean square error, mean absolute error, etc. Then, the target denoising loss is determined according to the denoising loss of denoising processing at each iteration. For example, the denoising losses of denoising processing at respective iterations are weighted and averaged or accumulated to obtain the target denoising loss.

In the video generation method provided in this embodiment, the denoising loss of denoising processing at each iteration is determined based on the noise data added in noise addition processing at each iteration by the preset image generation model and the corresponding denoising result obtained in denoising processing at each iteration, so as to obtain the target denoising loss. Therefore, the preset image generation model can be enabled to learn the deviation between the denoising result and the expected denoising result of denoising processing at each iteration by using the noise addition data, so as to further improve the model performance of the preset image generation model.

It should be noted that the network connection structure among the above target multimodal model, target image generation model, and target encoder-decoder network may be regarded as a diffusion model. The diffusion model of the present disclosure uses a video denoising network (that is, the target image generation model) as a basic network to generate a lip shape sequence synchronous with the target audio feature output by the target multimodal model in the hidden space with the video feature/facial feature of the object, so that the high definition of driving the lip shape can be improved, and thus a high-definition and controllable speaking video of the object is generated. Moreover, compared with the diffusion model of the single frame of image, the diffusion model of the present disclosure considers the temporal information among different video frames, and the synchronization between the audio and the lip shape is higher, so that the sudden change of the lip shape among different video frames can be effectively avoided, thereby improving the quality of video generation.

As a specific application example, a target application is installed on a mobile phone, and the target application is used to generate a video. In the target application, the target audio data may be collected by using a recording function, or a section of text, for example, "the weather is really good today", is input into the target application, a corresponding timbre is selected, and the input text is converted into the target audio data according to the selected timbre. Then, the target application uses the video generation method of the present disclosure to generate the target video corresponding to the target audio data. The generated target video is displayed or played on a target display page of the target application.

In this embodiment, a video generation apparatus is further provided, and the apparatus is used to implement the above embodiments and preferred implementations, and the description of which has been made will not be repeated. As used below, the term "module" may be a combination of software and/or hardware that implements a predetermined function. Although the apparatus described in the following embodiments is preferably implemented in software, the implementation of hardware, or a combination of software and hardware, is also possible and contemplated.

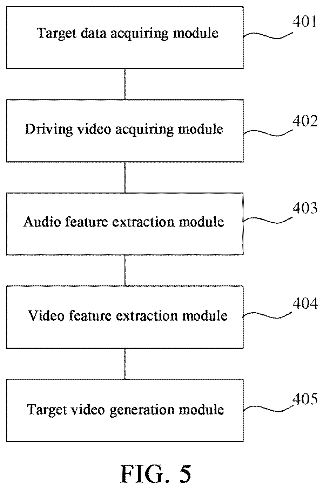

This embodiment provides a video generation apparatus, as shown in FIG. 5, video generation apparatus includes: a target data acquiring module 401, a driving video acquiring module 402, an audio feature extraction module 403, a video feature extraction module 404 and a target video generation module 405.

The target data acquiring module 401 is configured to acquire target audio data and first video data of a target object.

The driving video acquiring module 402 is configured to acquire second video data, the second video data is obtained by performing mask processing on a lip area in the video data of the target object.

The audio feature extraction module 403 is configured to perform feature processing on the target audio data based on a target multimodal model to obtain a target audio feature, the target multimodal model being obtained based on performing synchronization alignment training of a sample audio feature and a sample video feature on paired sample audio and sample video.

The video feature extraction module 404 is configured to perform feature extraction on the first video data and the second video data to obtain a feature to be processed.

The target video generation module 405 is configured to predict the lip area in the second video data based on the target audio feature and the feature to be processed, to determine a target video corresponding to the target audio data.

In some optional implementations, the target data acquiring module 401 includes an audio acquiring unit, configured to acquire the target audio data. The audio acquiring unit includes: an audio data acquiring sub-unit and a target text converting sub-unit.

The audio data acquiring sub-unit is configured to acquire a target text and a target timbre.

The target text converting sub-unit is configured to convert the target text into the target audio data based on the target timbre.

In some optional implementations, the video generation apparatus further includes an audio model determining module, configured to determine the target multimodal model. The audio model determining module includes: a first data acquiring unit and a multimodal model training unit.

The first data acquiring unit is configured to acquire positive sample data and negative sample data, the positive sample data includes synchronous first sample audio and first sample video, and the negative sample data includes asynchronous second sample audio and second sample video.

The multimodal model training unit is configured to perform synchronization alignment training of the sample audio feature and the sample video feature on a preset multimodal model based on the positive sample data and the negative sample data, to obtain the target multimodal model.

In some optional implementations, the target video generation module 405 includes: a lip area predicting unit and a feature data decoding unit.

The lip area predicting unit is configured to input the target audio feature and the feature to be processed into a target image generation model, and predict the lip area in the second video data to obtain target feature data, the target image generation model is obtained based on performing parameter update of a sample audio feature output by the target multimodal model and a video feature of a sample video of a sample object.

The feature data decoding unit is configured to decode the target feature data to obtain the target video.

In some optional implementations, the video generation apparatus further includes an image generation model determining module, configured to determine the target image generation model. The image generation model determining module includes: a second data acquiring unit, a first feature extraction unit, a lip mask processing unit, a second feature extraction unit, a third feature extraction unit, a forward noise addition processing unit, a reverse denoising processing unit and a model parameter adjustment unit.

The second data acquiring unit is configured to acquire a third sample audio, and a third sample video and a fourth sample video of the sample object.

The first feature extraction unit is configured to perform feature processing on the third sample audio and the third sample video based on the target multimodal model to obtain a sample audio feature.

The lip mask processing unit is configured to perform mask processing on a lip area in the third sample video to obtain a fifth sample video.

The second feature extraction unit is configured to perform feature extraction on the third sample video to obtain a first video feature.

The third feature extraction unit is configured to perform feature extraction on the fourth sample video and the fifth sample video to obtain a second video feature.

The forward noise addition processing unit is configured to input the first video feature into a preset image generation model to perform iterative noise addition processing, to obtain a target noise addition result.

The reverse denoising processing unit is configured to input the sample audio feature and the second video feature into the preset image generation model to perform iterative denoising processing on the target noise addition result, to determine a target denoising loss.

The model parameter adjustment unit is configured to adjust a parameter of the preset image generation model based on the target denoising loss to obtain the target image generation model.

In some optional implementations, the forward noise addition processing unit includes: an iterative noise addition processing subunit and a noise addition result determining subunit.

The iterative noise addition processing subunit is configured to input the first video feature into the preset image generation model to perform the iterative noise addition processing, to obtain a noise addition result of noise addition processing at each iteration.

The noise addition result determining subunit is configured to use a noise addition result of a noise addition processing at a last iteration as the target noise addition result.

In some optional implementations, the reverse denoising processing unit is specifically including a noise data acquiring subunit, a iterative denoising processing subunit and a denoising loss calculating subunit.

The noise data acquiring subunit is configured to acquire noise data added in noise addition processing at each iteration by the preset image generation model.

The iterative denoising processing subunit is configured to input the sample audio feature and the second video feature into the preset image generation model to perform the iterative denoising processing on the target noise addition result, to obtain a denoising result of denoising processing at each iteration, and the denoising result corresponds to the noise data.

The denoising loss calculating subunit is configured to determine a denoising loss of denoising processing at each iteration based on the denoising result and the corresponding noise data, to obtain the target denoising loss.

The above-mentioned further functional descriptions of the modules and units are the same as those of the above-mentioned corresponding embodiments, and will not be repeated here.

The video generation apparatus in this embodiment is presented in the form of functional units, the units refer to an Application Specific Integrated Circuit (ASIC) circuit, a processor that executes one or more software or fixed programs and a memory, and/or other devices that can provide the above-mentioned functions.

The embodiments of the present disclosure further provide a computer device, which has the above-mentioned video generation apparatus shown in FIG. 5.

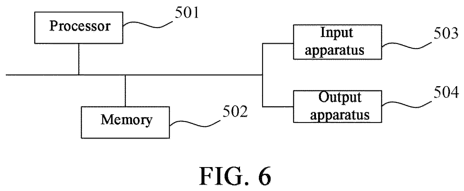

Please refer to FIG. 6. FIG. 6 is a structural block diagram of a computer device according to an optional embodiment of the present disclosure. As shown in FIG. 6, the computer device includes: one or more processors 501, a memory 502, and interfaces for connecting components, including high-speed interfaces and low-speed interfaces. The components communicate with each other using different buses, and can be installed on a public mainboard or installed in other ways as required. The processor can process instructions executed within the computer device, including instructions stored in the memory or on the memory to display graphical information of a GUI on an external input/output apparatus (such as a display device coupled to the interface). In some optional implementations, if required, multiple processors and/or multiple buses can be used together with multiple memories. Similarly, multiple computer devices can be connected, and each device provides part of necessary operations (for example, as a server array, a group of blade servers, or a multi-processor system). In FIG. 6, one processor 501 is taken as an example.

The processor 501 may be a central processor, a network processor, or a combination thereof. The processor 501 may further include a hardware chip. The above-mentioned hardware chip may be an application-specific integrated circuit, a programmable logic device, or a combination thereof. The above-mentioned programmable logic device may be a complex programmable logic device, a field programmable gate array, a general array logic, or any combination thereof.

The memory 502 has instructions executable by at least one processor 501 stored therein, which is configured to cause the at least one processor 501 to execute the method shown in the above embodiments.

The memory 502 may include a storage program area and a storage data area, where the storage program area may store an operating system, and applications required for at least one function; and the storage data area may store data created according to the use of the computer device, etc. In addition, the memory 502 may include a high-speed random access memory, and may also include a non-transient memory, such as at least one magnetic disk storage device, a flash memory device, or other non-transient solid-state storage devices. In some optional implementations, the memory 502 may optionally include a memory provided remotely from the processor 501, and these remote memories may be connected to the computer device via a network. Examples of the above network include but are not limited to the Internet, an intranet, a local area network, a mobile communication network and a combination thereof.

The memory 502 may include a volatile memory, such as a random access memory; the memory may also include a non-volatile memory, such as a flash memory, a hard disk or a solid state disk; and the memory 502 may also include a combination of the above kinds of memories.

The computer device further includes an input apparatus 503 and an output apparatus 504. The processor 501, the memory 502, the input apparatus 503 and the output apparatus 504 may be connected via a bus or in other ways, and FIG. 6 shows an example of connection via the bus.

The input apparatus 503 can receive input digital or character information, and generate key signal input related to user settings and function control of the computer device, such as a touch screen, a keypad, a mouse, a trackpad, a touchpad, an indicator bar, one or more mouse buttons, a trackball, a joystick, etc. The output apparatus 504 may include a display device, an auxiliary lighting apparatus (for example, an LED), a tactile feedback apparatus (for example, a vibration motor), etc. The above-mentioned display device includes but is not limited to a liquid crystal display, a light emitting diode, a display, and a plasma display. In some optional implementations, the display device may be a touch screen.

The embodiments of the present disclosure further provide a computer-readable storage medium. The above method according to the embodiments of the present disclosure may be implemented in hardware or firmware, or may be implemented as computer code that may be recorded on a storage medium, or may be implemented as computer code that is originally stored in a remote storage medium or a non-transitory machine-readable storage medium and downloaded through a network and will be stored in a local storage medium, so that the method described herein can be stored in such software processing on the storage medium using a general computer, a dedicated processor, or programmable or dedicated hardware. The storage medium may be a magnetic disk, an optical disk, a read-only memory, a random access memory, a flash memory, a hard disk, a solid state disk, etc.; further, the storage medium may also include a combination of the above types of memories. It can be understood that a computer, a processor, a microprocessor controller, or programmable hardware includes a storage component that can store or receive software or computer code, and when the software or computer code is accessed and executed by the computer, the processor, or the hardware, the method shown in the above embodiments is implemented.

A part of the present disclosure may be applied as a computer program product, for example, computer program instructions, which, when executed by a computer, can call or provide the method and/or technical solutions according to the present disclosure through the operation of the computer. Those skilled in the art should understand that the computer program instructions exist in the computer-readable medium in forms including but not limited to source files, executable files, installation package files, etc. Correspondingly, the computer program instructions are executed by the computer in manners including but not limited to: the computer directly executes the instructions, or the computer compiles the instructions and then executes the corresponding compiled program, or the computer reads and executes the instructions, or the computer reads and installs the instructions and then executes the corresponding installed program. Here, the computer-readable medium may be any available computer-readable storage medium or communication medium accessible by the computer.

Although the embodiments of the present disclosure are described in combination with the drawings, those skilled in the art can make various modifications and variations without departing from the scope of the present disclosure, and such modifications and variations all fall within the scope defined by the appended claims.

## Claims

1. A video generation method, comprising:
acquiring (S101) target audio data and first video data of a target object;
acquiring (S102) second video data, the second video data being obtained by performing mask processing on a lip area in video data of the target object;
performing (S103) feature processing on the target audio data based on a target multimodal model to obtain a target audio feature, the target multimodal model being obtained based on performing synchronization alignment training of a sample audio feature and a sample video feature on paired sample audio and sample video;
performing (S104) feature extraction on the first video data and the second video data to obtain a feature to be processed; and
predicting (S105) a lip area in the second video data based on the target audio feature and the feature to be processed, to determine a target video corresponding to the target audio data.

2. The method of claim 1, wherein the target multimodal model is determined by:
acquiring (S201) positive sample data and negative sample data, the positive sample data comprising synchronous first sample audio and first sample video, and the negative sample data comprising asynchronous second sample audio and second sample video; and
performing (S202) synchronization alignment training of the sample audio feature and the sample video feature on a preset multimodal model based on the positive sample data and the negative sample data, to obtain the target multimodal model.

3. The method of claim 1, wherein predicting (S105) the lip area in the second video data based on the target audio feature and the feature to be processed, to determine the target video corresponding to the target audio data comprises:
inputting the target audio feature and the feature to be processed into a target image generation model, and predicting the lip area in the second video data to obtain target feature data, the target image generation model being obtained based on performing parameter update of a sample audio feature output by the target multimodal model and a video feature of a sample video of a sample object; and
decoding the target feature data to obtain the target video.

4. The method of claim 3, wherein the target image generation model is determined by:
acquiring (S301) a third sample audio, and a third sample video and a fourth sample video of the sample object;
performing (S302) feature processing on the third sample audio and the third sample video based on the target multimodal model to obtain a sample audio feature;
performing (S303) mask processing on a lip area in the third sample video to obtain a fifth sample video;
performing (S304) feature extraction on the third sample video to obtain a first video feature;
performing (S305) feature extraction on the fourth sample video and the fifth sample video to obtain a second video feature;
inputting (S306) the first video feature into a preset image generation model to perform iterative noise addition processing, to obtain a target noise addition result;
inputting (S307) the sample audio feature and the second video feature into the preset image generation model to perform iterative denoising processing on the target noise addition result, to determine a target denoising loss; and
adjusting (S308) a parameter of the preset image generation model based on the target denoising loss to obtain the target image generation model.

5. The method of claim 4, wherein inputting (S306) the first video feature into the preset image generation model to perform the iterative noise addition processing to obtain the target noise addition result comprises:
inputting the first video feature into the preset image generation model to perform the iterative noise addition processing to obtain a noise addition result of noise addition processing at each iteration; and
using a noise addition result of a noise addition processing at a last iteration as the target noise addition result.

6. The method of claim 5, wherein inputting (S307) the sample audio feature and the second video feature into the preset image generation model to perform the iterative denoising processing on the target noise addition result, to determine the target denoising loss comprises:
acquiring noise data added in noise addition processing at each iteration by the preset image generation model;
inputting the sample audio feature and the second video feature into the preset image generation model to perform the iterative denoising processing on the target noise addition result, to obtain a denoising result of denoising processing at each iteration, the denoising result corresponding to the noise data; and
determining a denoising loss of denoising processing at each iteration based on the denoising result and the corresponding noise data, to obtain the target denoising loss.

7. The method of any of claims 1-6, wherein acquiring (S101) the target audio data comprises:
acquiring a target text and a target timbre; and
converting the target text into the target audio data based on the target timbre.

8. An video generation apparatus, comprising:
a target data acquiring module (401) configured to acquire target audio data and first video data of a target object;
a driving video acquiring module (402) configured to acquire second video data, the second video data being obtained by performing mask processing on a lip area in video data of the target object;
an audio feature extraction module (403) configured to perform feature processing on the target audio data based on a target multimodal model to obtain a target audio feature, the target multimodal model being obtained based on performing synchronization alignment training of a sample audio feature and a sample video feature on paired sample audio and sample video;
a video feature extraction module (404) configured to perform feature extraction on the first video data and the second video data to obtain a feature to be processed; and
a target video generation module (405) configured to predict a lip area in the second video data based on the target audio feature and the feature to be processed, to determine a target video corresponding to the target audio data.

9. A computer device, comprising:
a memory and a processor, the memory and the processor communicating with each other, the memory having computer instructions stored therein, and the processor executing the computer instructions to perform the video generation method of any of claims 1-7.

10. A computer-readable storage medium having computer instructions stored thereon, wherein the computer instructions are configured to cause a computer to perform the video generation method of any of claims 1-7.

11. A computer program product comprising computer instructions, wherein the computer instructions are configured to cause a computer to perform the video generation method of any of claims 1-7.
